(19) Europäisches Patentamt / European Patent Office / Office européen des brevets

(11) **EP 2 639 966 B1**

(12) **FASCICULE DE BREVET EUROPEEN**

(45) Date de publication et mention
de la délivrance du brevet:
**24.12.2014 Bulletin 2014/52**

(51) Int Cl.:
*H04B 1/7073* (2011.01)   *H04B 1/7103* (2011.01)

(21) Numéro de dépôt: **13158687.7**

(22) Date de dépôt: **12.03.2013**

(54) **Méthode d'estimation aveugle d'un code d'embrouillage d'une liaison montante wcdma**

Verfahren zur Blindschätzung von einem verschlüsselungscode eines WCDMA Aufwärtskanals

Method for blindly estimating a scrambling code of a WCDMA uplink channel

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2012 FR 1252338**

(43) Date de publication de la demande:
**18.09.2013 Bulletin 2013/38**

(73) Titulaire: **Commissariat à l'Énergie Atomique
et aux Énergies Alternatives
75015 Paris (FR)**

(72) Inventeur: **Bouvier des Noes, Mathieu
38000 Grenoble (FR)**

(74) Mandataire: **Augarde, Eric et al
Brevalex
56, boulevard de l'Embouchure
B.P. 27519
31075 Toulouse Cedex 2 (FR)**

(56) Documents cités:
**WO-A1-2008/049713   US-A1- 2007 206 638**

• **MOOSAVI R ET AL: "A Fast Scheme for Blind
Identification of Channel Codes", GLOBAL
TELECOMMUNICATIONS CONFERENCE
(GLOBECOM 2011), 2011 IEEE, IEEE, 5 décembre
2011 (2011-12-05), pages 1-5, XP032118709, DOI:
10.1109/GLOCOM.2011.6133507 ISBN:
978-1-4244-9266-4**

EP 2 639 966 B1

EP 2 639 966 B1

**Description**

**DOMAINE TECHNIQUE**

La présente invention concerne le domaine des télécommunications mobiles et plus particulièrement celui de la réduction de l'interférence dans un réseau femto-cellulaire.

**ÉTAT DE LA TECHNIQUE ANTÉRIEURE**

Les communications dans un réseau femto-cellulaire peuvent être affectées par des interférences générées par les communications d'une macro-cellule voisine.

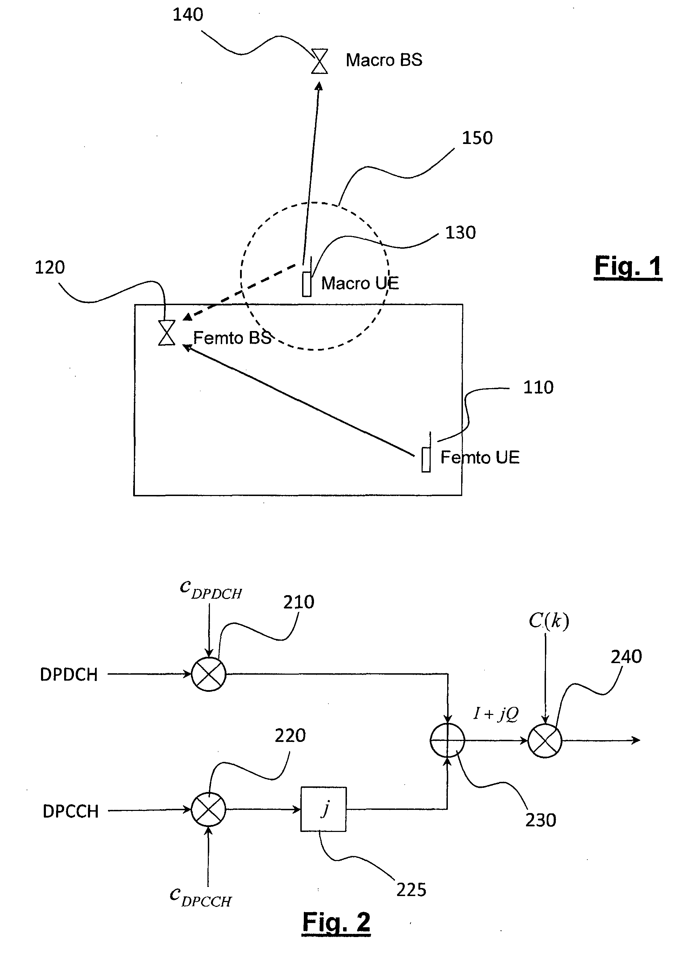

La Fig. 1 montre un scénario classique d'interférence entre un terminal attaché à une femto-cellule (« Femto UE »), 110, et un terminal attaché à une macro-cellule (« Macro UE »), 130. Nous supposons qu'une première liaison montante est établie dans la femto-cellule (du terminal 110 à la station de base « Femto BS », 120) et qu'une seconde liaison montante est établie dans une macro-cellule voisine (du terminal 130 à la station de base « Macro BS », 140). Si le terminal 130 est en bordure de la macro-cellule, il devra émettre avec une puissance importante, ce qui générera une interférence importante au niveau de la femto-cellule et pourra rendre impossible la communication entre le terminal 110 et la station de base 120. Autrement dit un utilisateur (« Macro-UE ») d'un réseau macro-cellulaire crée autour de lui une zone morte (dead *zone*), 150, dans le réseau femto-cellulaire.

Afin d'éliminer l'interférence, il est essentiel de déterminer le code d'embrouillage (*scrambling code*) utilisé sur la liaison montante du terminal 130. En effet, il n'existe pas dans la littérature d'algorithme de détection multi-utilisateur en mode aveugle pouvant faire abstraction du code d'embrouillage. Par détection en mode aveugle, on entend que la station de base femto-cellulaire 120 ne reçoit pas d'informations de la macro-cellule et notamment pas les paramètres de transmission des différents utilisateurs de la macro-cellule.

En revanche dès lors que le code d'embrouillage est connu, il est possible d'estimer localement le signal reçu en provenance du terminal 130 et de soustraire sa contribution dans le récepteur du terminal 120.

Lorsque le réseau macro-cellulaire est du type WCDMA, la détermination en mode aveugle est rendue encore plus complexe par le fait que chaque utilisateur de ce système utilise un code d'embrouillage spécifique. En outre, le signal émis par l'utilisateur étant étendu spectralement, l'estimation du code d'embrouillage doit se faire à faible niveau signal à bruit.

Le document US-A-2007/0206638 décrit une méthode d'acquisition et de démodulation d'un flux de données codées par un code d'embrouillage pouvant comprendre une séquence de Gold. Ce document propose une étape d'acquisition en aveugle du code d'embrouillage pour la voie descendante d'une liaison satellitaire.

Un but de la présente invention est de proposer une méthode de détermination d'un code d'embrouillage utilisé par une liaison montante d'un système WCDMA, par exemple pour éliminer l'interférence générée dans une femto-cellule voisine.

**EXPOSÉ DE L'INVENTION**

La présente invention est définie comme une méthode d'estimation de code d'embrouillage utilisé sur une liaison montante d'un terminal dans un système WCDMA, le signal émis par le terminal sur ladite liaison étant émis sous forme de trames et embrouillé au moyen du code d'embrouillage, le code d'embrouillage étant construit à partir d'une séquence de Gold ($z_n$) obtenue comme somme d'une première ($x_n$) et d'une seconde ($y$) séquences de longueur maximale, dans laquelle :

- on échantillonne, à la fréquence bribe du code d'embrouillage, le signal reçu par un récepteur ;
- on effectue un traitement différentiel des échantillons ainsi obtenus, ledit traitement différentiel comprenant le produit hermitien d'échantillons successifs et le calcul de la partie imaginaire du dit produit, le traitement différentiel fournissant une séquence de valeurs différentielles ($v(k)$);

- on multiplie la séquence de valeurs différentielles par une version décimée et décalée de la seconde séquence ($\tilde{Y}$), connue du récepteur, pour obtenir une séquence d'observables ($\varepsilon(k)$) ;
- on effectue un décodage itératif de la séquence d'observables pour obtenir une version décalée et décimée de la première séquence ($\tilde{x}_n$) ;
- on détermine, en un instant donné, le contenu ($\mathbf{SR}^x$) du registre à décalage du générateur de la première séquence, et on en déduit le code d'embrouillage.

Avantageusement, on vérifie que le récepteur est bien synchronisé par rapport au code d'embrouillage en :

2

- calculant à partir du code d'embrouillage une séquence de valeurs différentielles $\hat{\mu}(k)=\hat{C}_1(2k+1)\hat{C}_1(2k)\hat{C}_2(2k)$ où $\hat{C}_1$, $\hat{C}_2$ sont deux composantes du code d'embrouillage ;
- corrélant sur un nombre prédéterminé d'échantillons les valeurs différentielles avec les valeurs différentielles calculées à l'étape précédente ;
- déterminant si le résultat de ladite corrélation est supérieur à un seuil prédéterminé.

Dans le traitement différentiel, les valeurs différentielles sont obtenues par $v(k)=-\text{Im}(u(2k))$ avec $u(2k)=r(2k+1)r(2k)^*$ où $r(2k)$, $r(2k+1)$ sont des échantillons successifs du signal reçu.

La version décimée et décalée, $\tilde{y}$, de la seconde séquence est obtenue à partir de la seconde séquence $y$ au moyen de

$$\tilde{y}(k) = y(2k) + y(2k+1) + y(2k+4) + y(2k+6) + y(2k+17).$$

Avantageusement, ledit décodage itératif est un décodage par passage de messages de croyance entre des noeuds de variables et des noeuds de contraintes, lesdites contraintes étant fournies par le polynôme générateur de la première séquence.

Le code d'embrouillage est avantageusement estimé en :

- déterminant le contenu $\left(\mathbf{SR}_{Fib}^{\tilde{x}}\right)$ du registre à décalage d'un générateur de ladite version décalée et décimée ($\tilde{x}$) de la première séquence, selon une représentation de Fibonacci ;
- déterminant le contenu $\left(\mathbf{SR}_{Fib}^{x'}\right)$ du registre à décalage d'un générateur d'une version décalée et non décimée de la première séquence dans la représentation de Fibonacci, à partir du contenu obtenu à l'étape précédente ;
- déterminant le contenu $\left(\mathbf{SR}_{Fib}^{x}\right)$ du registre à décalage du générateur de la première séquence dans une représentation de Fibonacci, à partir du contenu obtenu à l'étape précédente ;
- calculant ladite séquence de Gold ($z_n$) comme somme de la première séquence obtenue à l'étape précédente, et de la seconde séquence ;
- déduisant le code d'embrouillage à partir du code Gold obtenu à l'étape précédente.

L'invention concerne, dans un second mode de réalisation, une méthode d'estimation de code d'embrouillage utilisé sur une liaison montante d'un terminal dans un système WCDMA, le signal émis par le terminal sur ladite liaison étant émis sous forme de trames et embrouillé au moyen du code d'embrouillage, le code d'embrouillage étant construit à partir d'une séquence de Gold ($z_n$) obtenue comme somme d'une première ($x_n$) et d'une seconde ($y$) séquences de longueur maximale, dans laquelle:

- on échantillonne, à la fréquence bribe du code d'embrouillage, le signal reçu par un récepteur ;
- on effectue un traitement différentiel des échantillons ainsi obtenus, ledit traitement différentiel comprenant le produit hermitien d'échantillons successifs et le calcul de la partie imaginaire du dit produit, le traitement différentiel fournissant une séquence de valeurs observables ($v(k)$);
- on effectue un décodage itératif de la séquence d'observables pour obtenir une troisième séquence ($a$), somme d'une version décalée et décimée de la première séquence ($\tilde{x}$) et d'une version décalée et décimée de la seconde séquence ($\tilde{y}$) ;
- on détermine le contenu $\left(\mathbf{SR}_{Gal}^{a}\right)$ du registre à décalage du générateur de la troisième séquence selon une représentation de Galois ;
- on détermine, à partir du contenu obtenu à l'étape précédente, les contenus respectifs $\left(\mathbf{SR}_{Fib}^{\tilde{x}}, \mathbf{SR}_{Fib}^{\tilde{y}}\right)$ du registre à décalage du générateur d'une version décalée et décimée de la première séquence ($\tilde{x}_n$) et du registre à décalage du générateur d'une version décalée et décimée de la seconde séquence ($\tilde{y}$), dans une représentation de Galois, et l'on en déduit les contenus respectifs des registres à décalage dans une représentation de Fibonacci ;
- on détermine, en un instant de mesure donné, à partir des contenus des registres dans une représentation de Fibonacci obtenus à l'étape précédente, les contenus respectifs $\left(\mathbf{SR}_{Gal}^{x}, \mathbf{SR}_{Gal}^{y}\right)$ des registres de générateurs des première et seconde séquences ($x_n$, $y$) dans une représentation de Fibonacci;
- on déduit, à partir des contenus des registres obtenus à l'étape précédente, les première et seconde séquences, puis le code d'embrouillage.

Le contenu $\left(\mathbf{SR}_{Gal}^{a}\right)$ du registre à décalage du générateur de la troisième séquence selon une représentation de Galois peut être déterminé à partir du contenu $\left(\mathbf{SR}_{Fib}^{a}\right)$ de ce générateur dans une représentation de Fibonacci, ce contenu étant lui-même obtenu comme la liste des premiers bits de la troisième séquence.

On déduit avantageusement du contenu du registre du générateur de la seconde séquence, en début de trame, et du contenu de ce même registre, déterminé à l'instant de la mesure, un décalage de l'instant de la mesure par rapport au début de trame.

**BRÈVE DESCRIPTION DES DESSINS**

D'autres caractéristiques et avantages de l'invention apparaîtront à la lecture de modes de réalisation de l'invention fait en référence aux figures jointes parmi lesquelles :

La Fig. 1, déjà décrite, illustre une situation d'interférence entre une femto-cellule et une macro-cellule ;
La Fig. 2, illustre de manière schématique la structure d'un émetteur sur la liaison montante d'un système WCDMA ;
La Fig. 3 représente de manière schématique la méthode de détermination d'un code d'embrouillage selon un premier mode de réalisation de l'invention ;
La Figure 4 représente de manière schématique le détail de l'étape 350 en Fig. 3 ;
Les Figs. 5A et 5B donnent la structure d'un même générateur d'une M-séquence respectivement dans une représentation de Fibonacci et une représentation de Galois ;
La Fig. 6 représente de manière schématique la méthode de détermination d'un code d'embrouillage selon un second mode de réalisation de l'invention.

**EXPOSÉ DÉTAILLÉ DE MODES DE RÉALISATION PARTICULIERS**

L'idée de base de l'invention est d'effectuer une estimation à l'aveugle du code d'embrouillage à partir d'une multiplication différentielle d'échantillons successifs du signal reçu.

Avant de décrire précisément cette méthode d'estimation à l'aveugle, il convient de rappeler comment s'effectue l'émission sur une liaison montante d'un système WCDMA.

La Fig. 2 illustre de manière schématique la structure de l'émetteur pour une telle liaison montante.

La liaison montante est constituée d'un canal de données, dénommé DPDCH (*Dedicated Physical Data Channel*), et d'un canal de contrôle, dénommé DPCCH (*Dedicated Physical Control Channel*). Le canal de contrôle transmet notamment des paramètres de transmission, d'estimation de canal et de contrôle de puissance. Les données et les informations de contrôle sont transmises sous forme de trames, chaque trame comportant 15 intervalles de transmission et chaque intervalle de transmission étant constitué de 2560 bribes (chips).

Les données sont étalées au moyen d'un code d'étalement $c_{DPDCH}$ et les informations de contrôle sont étalées au moyen d'un code d'étalement $c_{DPCCH}$. Les codes $c_{DPDCH}$ et $c_{DPCCH}$ sont orthogonaux pour séparer les canaux DPDCH et DPCCH. La norme WCDMA, décrite notamment dans le document de l'ETSI 3GP TS 25.213 v4.4.0 (2003-12), intitulé « Spreading and modulation (FDD) », 3rd Generation Partnership Project, Technical Specification Group Radio Access Network, Release 4, précise que le code $c_{DPCCH}$ est constitué d'une séquence de bits égaux à 1 et le code $c_{DPDCH}$ est constitué de paires de bits identiques, alternativement égaux à 1 et à -1.

On suppose en Fig. 2 que les données, informations de contrôle et codes d'étalement sont au format BPSK. Les données sont multipliées en 210 par le code d'étalement $c_{DPDCH}$ et les informations de contrôle sont multipliées en 220 par le code d'étalement $c_{DPCCH}$.

Les données étalées sont ensuite multiplexées sur des voies $I$ et $Q$ (multiplication par $j$ en 225 sur le canal DPDCH et sommation en 230) et le signal complexe $I + jQ$ ainsi obtenu est multiplié en 240 par un code d'embrouillage complexe, $C$, défini par :

$$C(k) = C_1(k)\left(1 + j(-1)^k C_2\left(2\left\lfloor\frac{k}{2}\right\rfloor\right)\right), \ k = 0,..,2^{25} - 2 \qquad (1)$$

où les composantes $C_1$ et $C_2$ sont construites à partir d'une séquence de Gold $Z_n$ :

$$C_1(k) = Z_n(k) \tag{2-1}$$

$$C_2(k) = Z_n\left(k + 16777232\right) \bmod. \left(2^{25} - 1\right) \tag{2-2}$$

la séquence de Gold $Z_n$ étant elle-même obtenue à l'aide de deux séquences de longueur maximale, notées $x_n$ et $y$ :

$$Z_n = 2z_n(k) - 1 \tag{3-1}$$

$$z_n(k) = x_n(k) + y(k) \tag{3-2}$$

Dans les expressions (2-1), (2-2), (3-1) et (3-2), les symboles en majuscule ( $C_1, C_2, Z_n$ ) représentent des valeurs BPSK {-1, +1} et les symboles en minuscule ($c_1, c_2, z_n, x_n, y$) leurs équivalents binaires {0, 1}. En outre, l'addition dans (3-2) est binaire.

On rappelle qu'une séquence de longueur maximale, ou M-séquence, est obtenue à partir d'un polynôme primitif. Si le degré de ce polynôme est $m$ la période de la séquence est maximale, soit $2^m - 1$. En pratique, une M-séquence est générée au moyen d'un registre à décalage (LFSR) à $m$ étages, rebouclé sur lui-même, les prises du registre correspondant aux coefficients du polynôme générateur. Les M-séquences $x_n$ et $y$ sont respectivement générées au moyen des polynômes générateurs $g(x) = x^{25} + x^{22} + 1$ et $h(x) = x^{25} + x^{24} + x^{23} + x^{22} + 1$, autrement dit, par les relations de récurrence :

$$x_n(k + 25) = x_n(k + 3) + x_n(k) \tag{4-1}$$

$$y(k + 25) = y(k + 3) + y(k + 2) + y(k + 1) + y(k) \tag{4-2}$$

Les M-séquences $x_n$ et $y$ sont réinitialisées à chaque début de trame, c'est-à-dire toutes les 38400 bribes. La séquence $y$ est initialisée en mettant tous les bits du registre à 1 ($y(0)=y(1)=...y(24)=1$), soit par le mot $\mathbf{SR}^y = 2^{25} - 1$ . La séquence $x_n$ est quant à elle initialisée par un mot de 25 bits, $\mathbf{SR}^{x_n}$ dépendant de l'utilisateur. On comprend ainsi que le code d'embrouillage $C$ dépend de l'utilisateur. Ce code est déterminé de manière univoque si l'on connait le contenu du registre à décalage, $\mathbf{SR}^{x_n}$, du générateur de $C$ en début de trame.

Nous nous placerons dans la suite dans le scenario représenté en Fig. 2 lorsque le système macro-cellulaire est de type WCDMA.

Nous distinguerons deux modes de réalisation selon que la station de base 120 est préalablement synchronisée ou non sur le signal émis par le terminal 130, autrement dit selon que la station de base 120 a identifié le début de trame.

Par souci de simplification mais sans préjudice de généralisation, nous supposerons dans la suite que le canal entre le terminal 130 et la station de base 120 est AWGN. Si le canal présente des trajets multiples, ces dernières génèrent une interférence supplémentaire qui sera pris en compte dans le terme de bruit.

Le signal reçu par la station de base 120 est de la forme suivante :

$$r(k) = e^{i\theta} C(k)\left(\beta_d x_{DPDCH}(k) + j\beta_c x_{DPCCH}(k)\right) + n(k) \tag{5}$$

où $\theta$ est le déphasage introduit par le canal, $\beta_d$, $\beta_c$ sont des coefficients réels fonction du gain sur les canaux DPCCH et DPDCH, $x_{DPDCH}(k)$ et $x_{DPCCH}(k)$ sont respectivement les signaux de données et de contrôle après étalement (par les codes d'étalement $c_{DPDCH}$ et $c_{DOPCCH}$, en 210 et 220 respectivement), $n(k)$ est un échantillon de bruit supposé additif, blanc, gaussien, centré (AWGN), $C(k)$ est la bribe du code d'embrouillage générée à l'instant $kT_c$ où $T_c$ est la période bribe.

La présente invention utilise un traitement différentiel du signal reçu. Ce signal, éventuellement filtré au moyen d'un filtrage adapté au canal, est échantillonné à la fréquence bribe $1/T_c$. Le traitement différentiel consiste à effectuer le produit hermitien de deux échantillons successifs, soit :

$$u(k) = r(k+1)r(k)^* =$$
$$C(k+1)C(k)^* \left( \beta_d x_{DPDCH}(k+1) + j\beta_C x_{DPCCH}(k+1) \right)\left( \beta_d x_{DPDCH}(k) - j\beta_C x_{DPCCH}(k) \right)$$
$$+C(k+1)\left( \beta_d x_{DPDCH}(k+1) + j\beta_C x_{DPCCH}(k+1) \right)n(k)^*$$
$$+C(k)^* \left( \beta_d x_{DPDCH}(k) - j\beta_C x_{DPCCH}(k) \right)n(k+1)$$
$$+n(k+1)n(k)^* \tag{6}$$

Etant donné, les codes d'étalement utilisés pour les canaux DPDCH et DPCCH, $x_{DPDCH}(2k+1)x_{DPDCH}(2k) = 1$ et $X_{DPCCH}(2k+1)x_{DPCCH}(2k) = 1$. Les bribes successives du code d'embrouillage vérifient la relation :

$$C(2k+1)C(2k)^* = -2jC_1(2k+1)C_1(2k)C_2(2k) \tag{7}$$

La valeur différentielle $u(2k)$ obtenue à l'instant $2kT_c$ (en prenant pour origine le début de la trame) peut s'exprimer sous la forme suivante :

$$u(2k) = -2j\left( \beta_c^2 + \beta_d^2 \right)C_1(2k+1)C_1(2k)C_2(2k) + b(2k) \tag{8}$$

où l'on a regroupé dans $b(2k)$ les trois termes de bruit. Si l'on pose $v(k) = -\text{Im}(u(2k))$, $v(k)$ est une valeur réelle représentant, sous une forme signée (BPSK), les bits de la séquence $a$ définie par :

$$a(k) = \frac{A(k)+1}{2} \tag{9-1}$$

avec

$$A(k) = C_1(2k+1)C_1(2k)C_2(2k) \tag{9-2}$$

Autrement dit, si $v(k)$ est positif, $\hat{a}(k)=1$ et, si $v(k)$ est négatif, $\hat{a}(k) = 0$, où $\hat{a}(k)$ est l'estimation de $a(k)$.

A partir de la définition de $C_1$ et $C_2$, cf. expressions (2-1), (2-2), (3-1) et (3-2), on peut montrer que $a(k)=\tilde{x}_n(k)+\tilde{y}(k)$ avec :

$$\tilde{x}_n(k) = x_n(2k) + x_n(2k+1) + x_n(2k+4) + x_n(2k+7) + x_n(2k+18) \tag{10-1}$$

$$\tilde{y}(k) = y(2k) + y(2k+1) + y(2k+4) + y(2k+6) + y(2k+17)$$

$$(10\text{-}2)$$

On peut montrer que la décimation d'une M-séquence par une puissance de 2 (ici simplement d'un facteur 2) n'est autre qu'une version décalée de cette M-séquence. De même, la somme de deux versions décalées d'une M-séquence conduit encore à une version décalée de cette M-séquence. Ainsi, la M-séquence $\tilde{x}_n$ possède le même polynôme générateur que $x_n$, seul le contenu du registre à décalage lors de l'initialisation en début de trame étant différent. De manière similaire, la M-séquence $\tilde{y}$ possède le même polynôme générateur que $y$, seul le contenu du registre à décalage lors de l'initialisation en début de trame étant différent.

Si l'on suppose maintenant que le récepteur de la station de base 120 est synchronisé sur le début de trame, il est possible de générer la séquence $y(k)$ car l'on connaît alors l'état initial $\mathbf{SR}^y$ ($\mathbf{SR}^y = 2^{25} - 1$) du registre à décalage de $y(k)$ au début de trame. On peut en déduire la séquence $\tilde{y}(k)$ à partir de l'expression (10-2).

Si l'on multiplie $v(k)$ par $\tilde{Y}(k) = 2\tilde{y}(k)\text{-}1$, on obtient la séquence d'observables:

$$\varepsilon(k) = v(k)\tilde{Y}(k) = 2\left(\beta_c^2 + \beta_d^2\right)\tilde{X}(k) + w(k) \qquad (11)$$

où $\tilde{X}_n(k) = 2\tilde{x}_n(k)\text{-}1$ et $w(k)$ est un terme de bruit, qui a les mêmes propriétés statistiques que $b(k)$.

Comme expliqué plus loin, il est possible de décoder $\tilde{x}_n(k)$ à partir de l'observation de $\varepsilon(k)$. On peut alors déterminer le contenu du registre $\mathbf{SR}^{\tilde{x}}$ du générateur de la séquence $\tilde{x}_n$ au début de la trame et enfin en déduire le contenu du registre $\mathbf{SR}^x$ du générateur de la séquence $x_n$

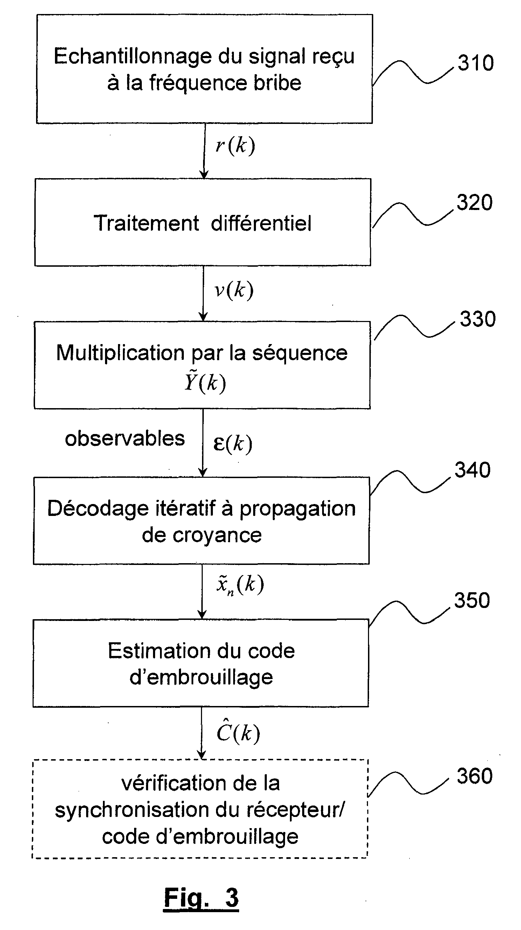

La Fig. 3 représente de manière schématique une méthode d'estimation d'un code d'embrouillage utilisé sur la liaison montante d'un système WCDMA, selon un premier mode de réalisation de l'invention.

Dans ce premier mode de réalisation, nous supposerons que le récepteur de la station de base 120 est synchronisé par rapport au signal émis par le terminal 130. Selon ce premier mode, le récepteur a soit effectivement identifié préalablement le début d'une trame, soit fait l'hypothèse qu'un échantillon donné correspondait à un début de trame. Dans le second cas, le récepteur pourra tester tour à tour une série d'échantillons et déterminer, à l'aide d'une étape 360 décrite plus loin, si l'hypothèse de synchronisation était bien vérifiée.

A l'étape 310, on échantillonne le signal reçu à la fréquence bribe du code d'embrouillage, $1/T_c$, le cas échéant après un filtrage adapté au canal de transmission entre le terminal 130 et la station de base 120.

Les échantillons $r(k)$ ainsi obtenus font l'objet d'un traitement différentiel en 320. Plus précisément, pour chaque échantillon, on calcule le produit hermitien de cet échantillon avec l'échantillon précédent. On détermine ensuite la partie imaginaire $v(k)=\text{-Im}(u(2k))$ des produits $u(k)$ de rang pair pour obtenir une séquence de parties imaginaires $v(k)$, dites valeurs différentielles.

A l'étape 330, on multiplie les éléments de la séquence de valeurs différentielles avec les éléments de la M-séquence $\tilde{y}$ obtenue comme version décalée de la M-séquence $y$ servant à former la séquence de Gold $z_n$ du code d'embrouillage. On obtient ainsi une séquence d'observables $\varepsilon(k)$, comme exprimé en (11).

A l'étape 340, on effectue un décodage itératif des observables $\varepsilon(k)$ issues de l'étape précédente pour obtenir une estimation de la séquence $\tilde{x}_n$. Etant donné que la séquence de bits $\tilde{x}_n(k)$ est une M-séquence obtenue par un polynôme générateur, en l'occurrence $g(x)$, elle peut être décodée par un algorithme à propagation de croyance (*belief propagation decoding*) tel que décrit par exemple dans l'article de K. M. Chugg and M. Zhu intitulé "A New Approach to Rapid PN Code Acquisition Using Iterative Message Passing Techniques", IEEE Journal on Selected Areas in Communications, vol. 25, no. 5, May 2005. En effet, le générateur d'une M-séquence de polynôme générateur :

$$g\left(x\right) = g_0 + g_1.x + \dots + g_r.x^r \qquad (12)$$

peut être vu comme un codeur de matrice de parité de taille $(M\text{-}r)\times M$ :

$$\mathbf{H}_{\mathrm{LFSR}} = \begin{pmatrix} g_r & g_{r-1} & \cdots & g_1 & g_0 & 0 & 0 & 0 & \cdots & 0 \\ 0 & g_r & g_{r-1} & \ddots & g_1 & g_0 & 0 & 0 & \cdots & 0 \\ \vdots & \ddots & \ddots & \ddots & \ddots & \ddots & \ddots & \ddots & \ddots & 0 \\ 0 & 0 & \cdots & g_r & g_{r-1} & \cdots & g_1 & g_0 & \cdots & 0 \end{pmatrix} \qquad (13)$$

où $M$ est le nombre de bits successifs considérés en sortie du générateur. Cette matrice de parité reflète les contraintes entre les bits de la M-séquence. Le générateur de la M-séquence peut être représenté, à l'instar des codeurs LDPC, par une suite de noeuds de variable et une suite de noeuds de contrainte. Le décodage se fait alors de manière itérative, par passage de messages entre les noeuds de variables et les noeuds de contraintes.

Dans le cas présent, les observables sont les valeurs $\varepsilon(k)$. L'algorithme permet d'estimer à chaque itération les valeurs souples (par exemple les logarithmes de rapports de vraisemblance ou LLRs) des bits $\tilde{x}_n(k)$. Les bits $\tilde{x}_n(k)$ sont ensuite obtenus à l'aide d'une décision dure sur ces LLRs.

A l'étape 350, on déduit de l'étape précédente le contenu $\mathbf{SR}^x$ du registre à décalage en début de trame pour la séquence $x_n$. Ce contenu définit de manière univoque la séquence $x_n$, donc le code Gold $z_n = x_n + y$ et par conséquent les composantes $C_1, C_2$ du code d'embrouillage $C$ à partir des relations (2-1), (2-2), (3-1) et (3-2). Le code d'embrouillage estimé à l'étape 350 est noté $\hat{C}$, ses composantes estimées sont notées $\hat{C}_1, \hat{C}_2$.

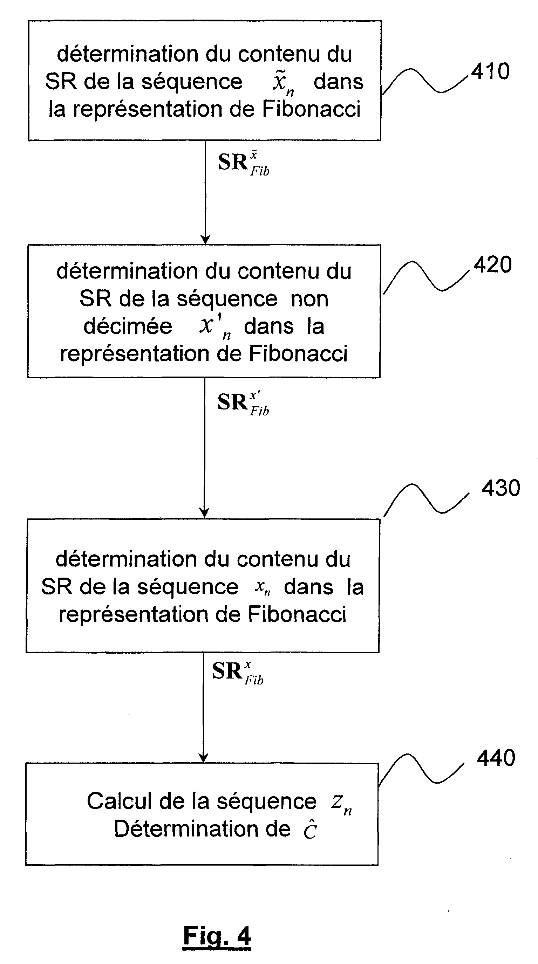

La Fig. 4 illustre schématiquement le détail de l'étape 350 selon un mode de réalisation de l'invention.

A l'étape 410, on détermine le contenu du registre à décalage, en début de trame, du générateur de la M-séquence $\tilde{x}_n$, dans la représentation de Fibonacci. Compte de la connexion entre les étages du registre, le contenu du registre à décalage est le mot formé par les premières valeurs $\tilde{x}_n(k)$, $k = 0,\ldots,24$.

A partir du contenu de ce registre à décalage, on détermine en 420 le contenu du registre à décalage du générateur de la M-séquence non décimée.

On rappelle que :

$$\tilde{x}_n(k) = x'_n(2k) \qquad (14\text{-}1)$$

où $x'_n$ représente la M-séquence non décimée qui vérifie :

$$x'_n(k) = x_n(k) + x_n(k+1) + x_n(k+4) + x_n(k+7) + x_n(k+18) \qquad (14\text{-}2)$$

Comme nous l'avons noté plus haut, la séquence $\tilde{x}_n$ est de même polynôme générateur que la séquence d'origine $x_n$. En effet la séquence $x'_n$ obtenue comme somme de versions décalées de la M-séquence $x_n$ est une M-séquence de même polynôme générateur que $x_n$, et $\tilde{x}_n$ obtenue par décimation d'un facteur 2 de la séquence $x'_n$ est encore une M-séquence de même polynôme générateur que $x'_n$ et donc que $x_n$.

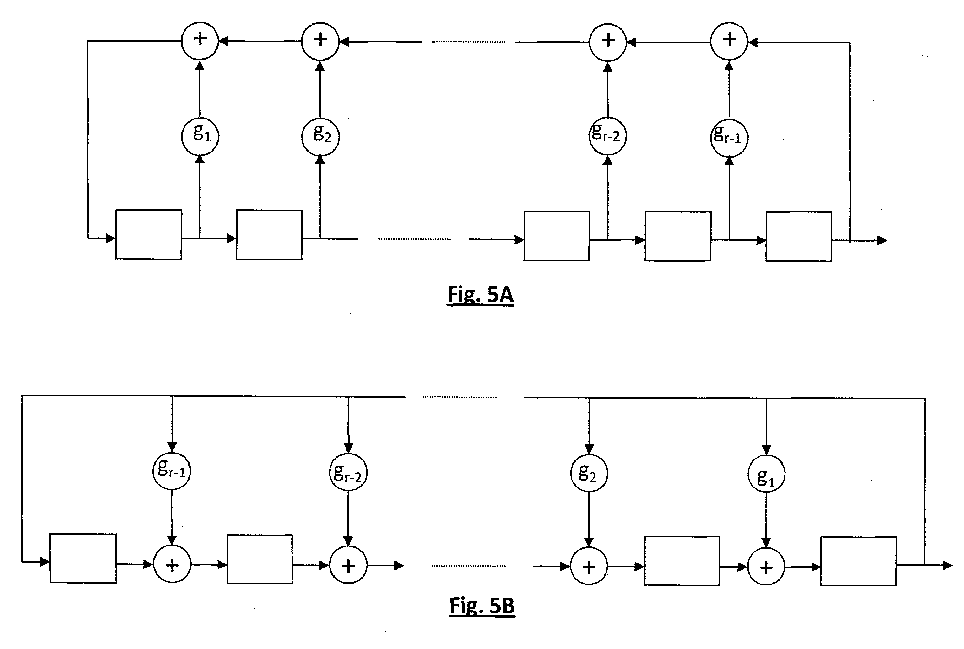

Le contenu du registre à décalage de la séquence décimée $\tilde{x}_n$ peut être obtenu dans une représentation de Fibonacci du générateur comme illustré en Fig. 5A. La représentation de Galois du même générateur est donnée en Fig. 5B. Le contenu du registre dans la représentation de Fibonacci peut être obtenu au moyen de la méthode décrite dans l'article de B. Arazi intitulé « Decimation of m-sequences leading to any desired phase shift », publié dans Electronics Letters, Vol.13, No.7, March 1977.

Plus précisément, si l'on note $\mathbf{SR}_{Fib}^{x'}$ le vecteur de taille r = 25 donnant le contenu du registre à décalage dans la représentation de Fibonacci du générateur de la séquence $x'_n$, et $\mathbf{SR}_{Fib}^{\tilde{x}}$ le contenu du registre à décalage pour la séquence décimée $\tilde{x}_n$ on a:

$$\mathbf{SR}_{Fib}^{x'} = \mathbf{T}_{undecim}^{1/2} \mathbf{SR}_{Fib}^{\tilde{x}} \qquad (15)$$

où $\mathbf{T}_{undecim}^{1/2}$ est une matrice de taille $r \times r$ donnant le changement d'état entre la séquence décimée $\tilde{x}_n$ et la séquence d'origine $x'_n$ pour une décimation de facteur ½.

La matrice $\mathbf{T}_{undecim}^{1/2}$ peut être obtenue selon la méthode détaillée dans l'article précité. Pour ce faire, on calcule d'abord $\alpha^{-1}$, la racine du polynôme inverse du polynôme générateur $(g^{-1}(x) = g(x)x^{-r} = x^{25} + x^3 + 1)$ de la séquence non décimée, $\mathbf{T}_{undecim}^{1/2}$ est alors la matrice binaire dont la $i^{\text{ème}}$ ligne est donnée par les coefficients de décomposition, $a_{ik}$ :

$$\alpha^{-ip} = \sum_{k=0}^{r} a_{i,k}\alpha^{-k} \qquad (16)$$

où $p$ est un entier vérifiant la relation de congruence $2p \equiv 1 \mod (2^r-1)$, par exemple $p=2^{r-1}$.

On peut montrer que les relations suivantes sont vérifiées, respectivement pour les lignes paires et les lignes impaires :

$$\alpha^{-2ip} = \alpha^{-i} \qquad (17\text{-}1)$$

$$\alpha^{-(2i+1)p} = \alpha^{-p-i} \qquad (17\text{-}2)$$

Les lignes paires de la matrice $\mathbf{T}_{undecim}^{1/2}$ sont obtenues directement à partir de (16) et (17-1). Pour les lignes impaires on calcule le reste de la division polynomiale de $\alpha^{-p-i}$ par le polynôme inverse $g^{-1}$, soit :

$$\alpha^{-p-i} = \sum_{k=0}^{r-1} c_{i,k}\alpha^{-k} \qquad (18)$$

La ligne impaire $2i+1$ étant alors donnée par les coefficients $c_{i,k}$ en vertu de (16), (17-2) et (18).

On obtient ainsi le contenu $\mathbf{SR}_{Fib}^{x'}$ du registre à décalage pour la séquence non décimée, en début de trame.

On en déduit ensuite, à l'étape 430, le contenu $\mathbf{SR}_{Fib}^{x}$ du registre à décalage pour la séquence $x_n$. Si l'on note $\mathbf{F}$ la matrice de transition d'état du générateur de la séquence $x_n$ dans la représentation de Fibonacci, c'est-à-dire, la matrice donnant l'état suivant, $\mathbf{SR}_{Fib}^{x}(k+1)$ (c'est-à-dire le contenu du registre à décalage à l'instant $(k+1)T_c$) en fonction de l'état courant, $\mathbf{SR}_{Fib}^{x}(k)$, soit :

$$\mathbf{SR}_{Fib}^{x}(k+1) = \mathbf{F}.\mathbf{SR}_{Fib}^{x}(k) \qquad (19)$$

avec :

$$\mathbf{F} = \begin{bmatrix} 0 & 1 & 0 & 0 & \cdots & 0 \\ 0 & 0 & 1 & 0 & \cdots & 0 \\ 0 & 0 & 0 & 1 & \cdots & 0 \\ \vdots & & \vdots & & \cdots & \vdots \\ 0 & 0 & 0 & 0 & \cdots & 1 \\ 1 & g_{r-1} & g_{r-2} & g_{r-3} & \cdots & g_1 \end{bmatrix} \qquad (20)$$

L'expression (14-2) se traduit alors sous forme matricielle :

$$\mathbf{SR}_{Fib}^{x'} = \left( \mathbf{F}^{18} + \mathbf{F}^7 + \mathbf{F}^4 + \mathbf{F} + \mathbf{I} \right) \mathbf{SR}_{Fib}^{x} \qquad (21)$$

où l'indice temporel $k$ a été omis par souci de simplification.

Au final, le contenu $\mathbf{SR}_{Fib}^{x}$ du registre à décalage pour la séquence $x_n$ est obtenu par :

$$\mathbf{SR}_{Fib}^{x} = \left( \mathbf{F}^{18} + \mathbf{F}^7 + \mathbf{F}^4 + \mathbf{F} + \mathbf{I} \right)^{-1} \mathbf{SR}_{Fib}^{x'} = \mathbf{\Omega} \mathbf{T}_{undecim}^{1/2} \mathbf{SR}_{Fib}^{\tilde{x}} \qquad (22)$$

avec: $\Omega = (\mathbf{F}^{18} + \mathbf{F}^7 + \mathbf{F}^4 + \mathbf{F} + \mathbf{I})^{-1}$ matrice qui peut être calculée une fois pour toute et stockée dans une mémoire du récepteur.

Le cas échéant, un contrôle d'erreur peut être effectué à ce stade. En effet, d'après la norme, le bit de poids fort dans le registre à décalage doit être égal à 1 en début de trame. Si ce bit n'est pas égal à 1, l'estimation du code d'embrouillage $C$ est alors interrompue.

Le contenu $\mathbf{SR}_{Fib}^{x}$ du registre de la séquence $x_n$ en début de trame permet de déterminer les éléments $x_n(k)$ de la séquence. On en déduit à l'étape 440 les bits $z_n(k) = x_n(k) + y(k)$ de la séquence de Gold puis les composantes $\hat{C}_1(k), \hat{C}_2(k)$ au moyen des relations (2-1), (2-2) et enfin les éléments du code d'embrouillage $\hat{C}(k)$ par l'expression (1).

Revenant à la Fig. 3, de manière optionnelle, on peut vérifier en 360 si le récepteur de la station de base 120 est bien synchronisé avec le code d'embrouillage du terminal 130.

On rappelle qu'à l'étape 320, on obtient les valeurs différentielles, cf. expression (8) :

$$v(k) = 2 \left( \beta_c^2 + \beta_d^2 \right) C_1(2k+1) C_1(2k) C_2(2k) + b_I(2k) \qquad (23)$$

où $b_I(2k)$ est un échantillon de bruit. Les valeurs $v(k)$ sont dénommées valeurs différentielles observées.

Une fois le contenu $\mathbf{SR}_{Fib}^{x}$ du registre à décalage de la séquence $x_n$ obtenu, et le code d'embrouillage $\hat{C}$ déduit à l'étape 350, on peut calculer la séquence $\hat{\mu}$ définie par :

$$\hat{\mu}(k) = \hat{C}_1(2k+1) \hat{C}_1(2k) \hat{C}_2(2k) \qquad (24)$$

Les valeurs $\hat{\mu}(k)$ sont dénommées valeurs différentielles calculées.

On effectue ensuite la corrélation entre la séquence $v$ des valeurs différentielles observées avec la séquence $\hat{\mu}$ des valeurs différentielles calculées, soit :

$$V = \sum_{k=0}^{L} v(k)\hat{\mu}(k) \tag{25}$$

la corrélation étant prise à chaque fois sur une séquence de $L$ échantillons.

On compare le résultat de la corrélation $V$ à un seuil prédéterminé, $\lambda$.

Si $V > \lambda$ on en conclut que le récepteur est bien synchronisé avec le code d'embrouillage. A défaut, le récepteur n'est pas synchronisé avec le code d'embrouillage.

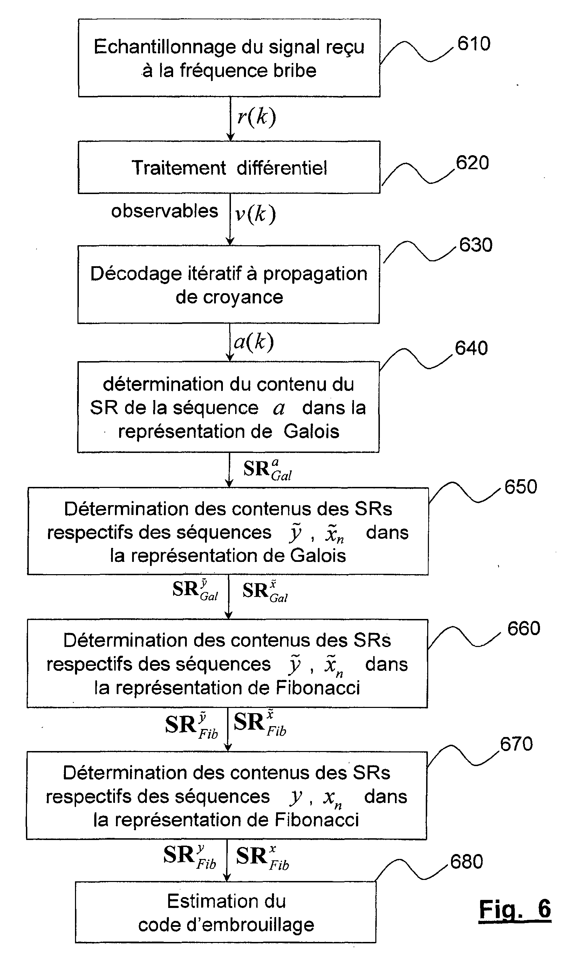

La Fig. 6 représente de manière schématique une méthode d'estimation d'un code d'embrouillage utilisé sur la liaison montante d'un système WCDMA, selon un second mode de réalisation de l'invention.

Dans ce second mode de réalisation, le récepteur n'est pas synchronisé sur le signal de l'émetteur 130 et par conséquent ne connaît pas le début des trames. Il est donc incapable a *priori* de générer directement la M-séquence $y$ et *a fortiori* la séquence décalée $\tilde{y}$.

Les étapes 610 et 620 sont identiques aux étapes 310 et 320 précédemment décrites.

En sortie du traitement différentiel en 620, on dispose des valeurs différentielles :

$$v(k) = 2\left(\beta_c^2 + \beta_d^2\right) A(k) + b_I(2k) \tag{26}$$

où $A(k) = C_1(2k + 1)C_1(2k)C_2(2k)$ (cf. expression 9-2) est une représentation signée de $a(k) = \tilde{x}_n(k) + \tilde{y}(k)$ et $\tilde{x}_n(k)$, $\tilde{y}(k)$ sont respectivement définis par les expressions (10-1) et (10-2).

On peut montrer que la séquence somme $a$ est générée par le polynôme générateur $g_a(x)$ égal au produit des polynômes générateurs des séquences $\tilde{x}$ et $\tilde{y}$ :

$$g_a(x) = g(x)h(x) \tag{27}$$

A l'étape 630, on effectue un décodage itératif des observables $v(k)$ pour obtenir une estimation de la séquence $a$. Comme à l'étape 340, ce décodage peut être effectué par un algorithme à propagation de croyance. Le décodage se fait, de manière connue en soi, par passage de messages entre les noeuds de variables et les noeuds de contraintes, les variables étant des observables $v(k)$ et les contraintes étant fixées par le polynôme générateur $g_a(x)$.

On obtient au terme du décodage une séquence de bits estimés.

Le polynôme $g_a(x)$ étant de degré 50, on peut déterminer à chaque instant le contenu $\mathbf{SR}_{Fib}^{a}$ du registre de la séquence $a$, dans la représentation de Fibonacci (cf. Fig. 5A) comme la liste des 50 premiers bits de cette séquence.

Le contenu $\mathbf{SR}_{Gal}^{a}$ du registre de la séquence $a$ dans la représentation de Galois est déterminé à l'étape 640.

De manière générale, si l'on note $\mathbf{SR}_{Fib}$ le contenu du registre à décalage d'une séquence dans la représentation de Fibonacci et $\mathbf{SR}_{Gal}$ le contenu du registre à décalage de cette même séquence dans la représentation de Galois et si l'on note $\mathbf{T}^{GF}$ la matrice de transposition d'états de la représentation de Fibonacci à celle de Galois, on a :

$$\mathbf{SR}_{Gal} = \mathbf{T}^{GF}\mathbf{SR}_{Fib} \tag{28}$$

où les éléments de la matrice de transposition sont donnés par, en prenant les conventions de notation des Figs. 5A et 5B :

$$T_{ij}^{GF} = g(i - j) \text{ si } j \leq i \text{ et } T_{ij}^{GF} = 0 \text{ sinon} \tag{29}$$

Dans le cas présent, $\mathbf{SR}_{Gal}^{a} = \mathbf{T}_{g_a}^{GF} \mathbf{SR}_{Fib}^{a}$, où la matrice $\mathbf{T}_{g_a}^{GF}$ est construite à partir des coefficients du polynôme $g_a(x)$ dans l'expression (29).

A l'étape 650, on déduit de l'état $\mathbf{SR}_{Gal}^{a}$ du registre de la séquence $a$, les états respectifs des registres des séquences $\tilde{x}_n$ et $\tilde{y}$ dans la représentation de Galois.

Si l'on note sous la forme polynomiale $A_{reg}(x) = \sum_{i=0}^{50} a(i)x^i$ l'état du registre de la séquence $\tilde{X}_{reg}(x) = \sum_{i=0}^{25} \tilde{x}(i)x^i$ l'état du registre de la séquence $\tilde{x}_n$ et $\tilde{Y}_{reg}(x) = \sum_{i=0}^{25} \tilde{y}(i)x^i$ l'état du registre de la séquence $\tilde{y}$ dans la représentation de Galois (cf. Fig. 5B), on a la relation :

$$A_{reg}(x) = g(x)\tilde{Y}_{reg}(x) + h(x)\tilde{X}_{reg}(x) \tag{30}$$

Cette relation peut encore s'exprimer, de manière équivalente, sous forme matricielle :

$$\mathbf{SR}_{Gal}^{a} = \mathbf{T}_{Gold}\begin{pmatrix} \mathbf{SR}_{Gal}^{\tilde{x}} \\ \mathbf{SR}_{Gal}^{\tilde{y}} \end{pmatrix} \tag{31}$$

où $SR_{Gal}^{a} = (a_{Gal}(0),...,a_{Gal}(49))^T$, $SR_{Gal}^{\tilde{x}} = (\tilde{x}_{Gal}(0),...,\tilde{x}_{Gal}(24))^T$, $SR_{Gal}^{\tilde{y}} = (\tilde{y}_{Gal}(0),...,\tilde{y}_{Gal}(24))^T$ sont respectivement les vecteurs donnant les états des registres des séquences $a$, $\tilde{y}$ et $\tilde{x}_n$ à un instant donné dans la représentation de Galois et :

$$\mathbf{T}_{Gold} = \begin{pmatrix} h(0) & 0 & \cdots & 0 & g(0) & 0 & \cdots & 0 \\ \vdots & h(0) & & \vdots & \vdots & g(0) & & \vdots \\ h(r) & \vdots & \ddots & 0 & g(r) & \vdots & \ddots & 0 \\ 0 & h(r) & & h(0) & 0 & g(r) & & g(0) \\ \vdots & & \ddots & \vdots & \vdots & & \ddots & \vdots \\ 0 & \cdots & 0 & h(r) & 0 & \cdots & 0 & g(r) \end{pmatrix} \tag{32}$$

On peut alors déduire les états des registres $\mathbf{SR}_{Gal}^{\tilde{x}}$ et $\mathbf{SR}_{Gal}^{\tilde{y}}$ dans la représentation de Galois par :

$$\begin{pmatrix} \mathbf{SR}_{Gal}^{\tilde{x}} \\ \mathbf{SR}_{Gal}^{\tilde{y}} \end{pmatrix} = \mathbf{T}_{Gold}^{-1}\mathbf{SR}_{Gal}^{a} \tag{33}$$

A l'étape 660, on détermine le contenu des registres à décalage des séquences $\tilde{y}$ et $\tilde{x}_n$ dans la représentation de Fibonacci, notés $\mathbf{SR}_{Fib}^{\tilde{y}}$ et $\mathbf{SR}_{Fib}^{\tilde{x}}$.

L'état du registre dans la représentation de Fibonacci peut en effet être à partir de l'état du registre dans la représentation de Galois au moyen de la matrice $\mathbf{T}^{GF}$ définie précédemment:

$$\mathbf{SR}_{Fib} = \left(\mathbf{T}^{GF}\right)^{-1} \mathbf{SR}_{Gal} \qquad\qquad (34)$$

On peut ainsi déterminer l'état des registres $\mathbf{SR}_{Fib}^{\tilde{y}}$ et $\mathbf{SR}_{Fib}^{\tilde{x}}$ de la manière suivante :

$$\mathbf{SR}_{Fib}^{\tilde{y}} = \left(\mathbf{T}_{h}^{GF}\right)^{-1} \mathbf{SR}_{Gal}^{\tilde{y}} \qquad\qquad (35\text{-}1)$$

$$\mathbf{SR}_{Fib}^{\tilde{x}} = \left(\mathbf{T}_{g}^{GF}\right)^{-1} \mathbf{SR}_{Gal}^{\tilde{x}} \qquad\qquad (35\text{-}2)$$

où $\mathbf{T}_{h}^{GF}$ et $\mathbf{T}_{g}^{GF}$ sont les matrices de transposition selon (33) pour les polynômes $h(x)$ et $g(x)$ respectivement.

A l'étape 670, on détermine les contenus respectifs des registres à décalage des séquences $y$ et $x_n$ à partir de ceux des séquences $\tilde{y}$ et $\tilde{x}_n$.

Pour ce faire, on procède comme à l'étape 420, à ceci près qu'on estime également le contenu du registre de la séquence $y$, inconnu ici du récepteur, soit :

$$\mathbf{SR}_{Fib}^{x} = \boldsymbol{\Omega}_{g} \mathbf{T}_{undecim,g}^{1/2} \mathbf{SR}_{Fib}^{\tilde{x}} \qquad\qquad (36\text{-}1)$$

$$\mathbf{SR}_{Fib}^{y} = \boldsymbol{\Omega}_{h} \mathbf{T}_{undecim,h}^{1/2} \mathbf{SR}_{Fib}^{\tilde{y}} \qquad\qquad (36\text{-}2)$$

où l'on a distingué ici les matrices $\Omega_g$, $\Omega_n$ et $\mathbf{T}_{undecim,g}^{1/2}$, $\mathbf{T}_{undecim,h}^{1/2}$ pour rappeler qu'elles dépendent des coefficients des polynômes générateurs $g(x)$ et $h(x)$ respectivement. A partir des états $\mathbf{SR}_{Fib}^{x}$ et $\mathbf{SR}_{Fib}^{y}$ à un instant de mesure $k_0 T_c$ on peut déterminer les bits $x_n(k)$ et $y(k)$ à tout instant $kT_c$.

A l'étape 680, on détermine le code d'embrouillage $\hat{C}$, c'est-à-dire les valeurs $C(k)$ à partir des bits $x_n(k)$ et $y(k)$ obtenus à l'étape précédente, au moyen des relations (2-1), (2-2), (3-1),(3-2).

On peut en outre synchroniser le récepteur sur le début de la trame étant donné que l'on connait l'état du registre de la séquence $y$ en début de trame (état initial) et celui à l'instant de mesure $k_0 T_c$. On applique autant de fois que nécessaire la matrice de changement d'état (du générateur de la séquence $y$) au contenu initial jusqu'à ce que l'on retrouve $\mathbf{SR}_{Fib}^{y}$ (obtenu à l'instant de la mesure). Si $m$ est le nombre d'applications successives de la matrice de changement d'état pour obtenir $\mathbf{SR}_{Fib}^{y}$, le décalage de l'instant de mesure par rapport au début de la trame n'est autre que $mT_c$.

Connaissant le code d'embrouillage du terminal 130 et son code d'étalement, le récepteur de la station de base 120 peut estimer les symboles émis par le terminal. Il peut alors régénérer la contribution au signal reçu provenant de ce terminal, à partir du code d'embrouillage, du code d'étalement, du filtre de mise en forme et de la réponse impulsionnelle du canal. Cette contribution est alors soustraite du signal reçu, de manière connue en soi, pour éliminer l'interférence due au terminal 130. Le cas échéant cette opération peut être répétée en parallèle ou en série pour éliminer l'interférence de plusieurs utilisateurs du système macro-cellulaire WCDMA.

## Revendications

**1.** Méthode d'estimation de code d'embrouillage utilisé sur une liaison montante d'un terminal dans un système WCDMA, le signal émis par le terminal sur ladite liaison étant émis sous forme de trames et embrouillé au moyen du code d'embrouillage, le code d'embrouillage étant construit à partir d'une séquence de Gold ($z_n$) obtenue comme somme d'une première ($x_n$) et d'une seconde ($y$) séquences de longueur maximale, dans laquelle :

- on échantillonne (310), à la fréquence bribe du code d'embrouillage, le signal reçu par un récepteur ;
- on effectue un traitement différentiel (320) des échantillons ainsi obtenus, ledit traitement différentiel comprenant le produit hermitien d'échantillons successifs et le calcul de la partie imaginaire du dit produit, le traitement différentiel fournissant une séquence de valeurs différentielles ($v(k)$);
- on multiplie (330) la séquence de valeurs différentielles par une version décimée et décalée de la seconde séquence ($\tilde{Y}$), connue du récepteur, pour obtenir une séquence d'observables ($\varepsilon(k)$);
- on effectue un décodage itératif (340) de la séquence d'observables pour obtenir une version décalée et décimée de la première séquence ($\tilde{x}_n$);
- on détermine (350), en un instant donné, le contenu ($\mathbf{SR}^x$) du registre à décalage du générateur de la première séquence, et on en déduit le code d'embrouillage.

**2.** Méthode d'estimation de code d'embrouillage selon la revendication 1, **caractérisée en ce que** l'on vérifie que le récepteur est bien synchronisé par rapport au code d'embrouillage (360) en :

- calculant à partir du code d'embrouillage une séquence de valeurs différentielles $\hat{\mu}(k)=\hat{C}_1(2k+1)\hat{C}_1(2k)\hat{C}_2(2k)$ où $\hat{C}_1$, $\hat{C}_2$ sont deux composantes du code d'embrouillage ;
- corrélant sur un nombre prédéterminé d'échantillons les valeurs différentielles avec les valeurs différentielles calculées à l'étape précédente ;
- déterminant si le résultat de ladite corrélation est supérieur à un seuil prédéterminé.

**3.** Méthode d'estimation de code d'embrouillage selon la revendication 1 ou 2, **caractérisée en ce que**, dans le traitement différentiel, les valeurs différentielles sont obtenues par $v(k)=-\text{Im}(u(2k))$ avec $u(2k)=r(2k+1)r(2k)^*$ où $r(2k)$, $r(2k+1)$ sont des échantillons successifs du signal reçu.

**4.** Méthode d'estimation de code d'embrouillage selon l'une des revendications précédentes, **caractérisée en ce que** la version décimée et décalée, $\hat{y}$, de la seconde séquence est obtenue à partir de la seconde séquence $y$ au moyen de $\hat{y}(k)= y(2k) + y(2k+1)+ y(2k+4) + y(2k+6) + y(2k+17)$.

**5.** Méthode d'estimation de code d'embrouillage selon l'une des revendications précédentes, **caractérisée en ce que** ledit décodage itératif est un décodage par passage de messages de croyance entre des noeuds de variables et des noeuds de contraintes, lesdites contraintes étant fournies par le polynôme générateur de la première séquence.

**6.** Méthode d'estimation de code d'embrouillage selon l'une des revendications précédentes, **caractérisée en ce que** l'on estime le code d'embrouillage en :

- déterminant (410) le contenu $\left(\mathbf{SR}_{Fib}^{\tilde{x}}\right)$ du registre à décalage d'un générateur de ladite version décalée et décimée ($\tilde{x}$) de la première séquence, selon une représentation de Fibonacci;

- déterminant (420) le contenu $\left(\mathbf{SR}_{Fib}^{x'}\right)$ du registre à décalage d'un générateur d'une version décalée et non décimée de la première séquence dans la représentation de Fibonacci, à partir du contenu obtenu à l'étape précédente ;

- déterminant (430) le contenu $\left(\mathbf{SR}_{Fib}^{x}\right)$ du registre à décalage du générateur de la première séquence dans une représentation de Fibonacci, à partir du contenu obtenu à l'étape précédente ;
- calculant (440) ladite séquence de Gold ($z_n$) comme somme de la première séquence obtenue à l'étape précédente, et de la seconde séquence ;
- déduisant (440) le code d'embrouillage à partir du code Gold obtenu à l'étape précédente.

**7.** Méthode d'estimation de code d'embrouillage utilisé sur une liaison montante d'un terminal dans un système WCDMA, le signal émis par le terminal sur ladite liaison étant émis sous forme de trames et embrouillé au moyen du code d'embrouillage, le code d'embrouillage étant construit à partir d'une séquence de Gold ($z_n$) obtenue comme somme d'une première ($x_n$) et d'une seconde ($y$) séquences de longueur maximale, dans laquelle :

- on échantillonne (610), à la fréquence bribe du code d'embrouillage, le signal reçu par un récepteur ;
- on effectue un traitement différentiel (620) des échantillons ainsi obtenus, ledit traitement différentiel comprenant le produit hermitien d'échantillons successifs et le calcul de la partie imaginaire du dit produit, le traitement différentiel fournissant une séquence de valeurs observables ($v(k)$);
- on effectue un décodage itératif (630) de la séquence d'observables pour obtenir une troisième séquence ($a$), somme d'une version décalée et décimée de la première séquence ($\tilde{x}$) et d'une version décalée et décimée de la seconde séquence ($\tilde{y}$) ;
- on détermine (640) le contenu $( \mathbf{SR}_{Gal}^{a} )$ du registre à décalage du générateur de la troisième séquence selon une représentation de Galois ;
- on détermine (650), à partir du contenu obtenu à l'étape précédente, les contenus respectifs $( \mathbf{SR}_{Fib}^{\tilde{x}} , \mathbf{SR}_{Fib}^{\tilde{y}} )$ du registre à décalage du générateur d'une version décalée et décimée de la première séquence ($\tilde{x}_n$) et du registre à décalage du générateur d'une version décalée et décimée de la seconde séquence ($\tilde{y}$), dans une représentation de Galois, et l'on en déduit (660) les contenus respectifs des registres à décalage dans une représentation de Fibonacci ;
- on détermine (670), en un instant de mesure donné, à partir des contenus des registres dans une représentation de Fibonacci obtenus à l'étape précédente, les contenus respectifs $( \mathbf{SR}_{Gal}^{x} , \mathbf{SR}_{Gal}^{y} )$ des registres de générateurs des première et seconde séquences ($x_n$, $y$) dans une représentation de Fibonacci;
- on déduit (680) à partir des contenus des registres obtenus à l'étape précédente, les première et seconde séquences, puis le code d'embrouillage.

8.  Méthode d'estimation de code d'embrouillage selon la revendication 7, **caractérisée en ce que** l'on détermine (640) le contenu $( \mathbf{SR}_{Gal}^{a} )$ du registre à décalage du générateur de la troisième séquence selon une représentation de Galois à partir du contenu $( \mathbf{SR}_{Fib}^{a} )$ du registre à décalage de ce générateur dans une représentation de Fibonacci, ce contenu étant lui-même obtenu comme la liste des premiers bits de la troisième séquence.

9.  Méthode d'estimation de code d'embrouillage selon la revendication 7 ou 8, **caractérisée en ce que** l'on déduit du contenu du registre du générateur de la seconde séquence, en début de trame, et du contenu de ce même registre, déterminé à l'instant de la mesure, un décalage de l'instant de la mesure par rapport au début de trame.

## Patentansprüche

1.  Verfahren zur Schätzung eines Verschlüsselungscodes, der auf einer Aufwärtsverbindung eines Terminals in einem WCDMA-System verwendet wird, wobei das von dem Terminal auf der Verbindung ausgesandte Signal in Form von Frames ausgesandt und mittels des Verschlüsselungscodes verschlüsselt wird, wobei der Verschlüsselungscode erstellt wird ausgehend von einer Gold-Sequenz ($z_n$), die erhalten wird als Summe einer ersten ($x_n$) und einer zweiten ($y$) Sequenz von maximaler Länge, wobei:

    - man das von einem Empfänger empfangene Signal mit der Bruchteilsfrequenz des Verschlüsselungscodes abtastet (310);
    - man eine differenzielle Verarbeitung der derart erhaltenen Abtastwerte durchführt (320), wobei die differenzielle Verarbeitung das hermitesche Produkt von aufeinanderfolgenden Abtastwerten und die Berechnung des Imaginärteils des Produkts umfasst, wobei die differenzielle Verarbeitung eine Sequenz von differenziellen Werten ($v(k)$) liefert;
    - man die Sequenz von differenziellen Werten mit einer vom Empfänger bekannten dezimierten und verschobenen Version der zweiten Sequenz ($\tilde{Y}$) multipliziert (330), um eine Sequenz von Observablen ($\varepsilon(k)$) zu erhalten;
    - man eine iterative Dekodierung (340) der Sequenz von Observablen durchgeführt, um eine verschobene und dezimierte Version der ersten Sequenz ($\tilde{x}_n$) zu erhalten;
    - man zu einem gegebenen Zeitpunkt den Inhalt ($SR^x$) des Schieberegisters des Generators der ersten Sequenz bestimmt (350) und hieraus den Verschlüsselungscode ableitet.

2.  Verfahren zur Schätzung eines Verschlüsselungscodes nach Anspruch 1, **dadurch gekennzeichnet, dass** man überprüft, ob der Empfänger bezüglich des Verschlüsselungscodes gut synchronisiert ist (360), indem man:

- ausgehend vom Verschlüsselungscode eine Sequenz von differenziellen Werten $\hat{\mu}(k)=\hat{C}_1(2k+1)\hat{C}_1(2k)\hat{C}_2(2k)$ berechnet, wobei $\hat{C}_1$, $\hat{C}_2$ zwei Komponenten des Verschlüsselungscodes sind;
- auf einer vorbestimmten Zahl von Abtastwerten die differenziellen Werte mit den im vorhergehenden Schritt berechneten differenziellen Werten korreliert;
- bestimmt, ob das Ergebnis der Korrelation größer als eine vorbestimmte Schwelle ist.

3. Verfahren zur Schätzung eines Verschlüsselungscodes nach Anspruch 1 oder 2, **dadurch gekennzeichnet, dass** bei der differenziellen Verarbeitung die differenziellen Werte erhalten werden durch $v(k)=-Im(u(2k))$ mit $u(2k)=r(2k+1)r(2k)^*$ wobei $r(2k)$, $r(2k+1)$ aufeinanderfolgende Abtastwerte des empfangenen Signals sind.

4. Verfahren zur Schätzung eines Verschlüsselungscodes nach einem der vorhergehenden Ansprüche, **dadurch gekennzeichnet, dass** die dezimierte und verschobene Version, $\tilde{y}$, der zweiten Sequenz erhalten wird ausgehend von der zweiten Sequenz $\tilde{y}$ mittels $\tilde{y}(k)=y(2k)+y(2k+1)+y(2k+4)+y(2k+6)+y(2k+17)$.

5. Verfahren zur Schätzung eines Verschlüsselungscodes nach einem der vorhergehenden Ansprüche, **dadurch gekennzeichnet, dass** die iterative Dekodierung eine Dekodierung durch Durchgang von Wachstumsnachrichten zwischen variablen Knoten und Klauselknoten ist, wobei die Klauseln durch das Generatorpolynom der ersten Sequenz geliefert werden.

6. Verfahren zur Schätzung eines Verschlüsselungscodes nach einem der vorhergehenden Ansprüche, **dadurch gekennzeichnet, dass** man den Verschlüsselungscode schätzt, indem man:

- den Inhalt $(SR_{Fib}^{\tilde{x}})$ des Schieberegisters eines Generators der verschobenen und dezimierten Version $(\tilde{x})$ der ersten Sequenz gemäß einer Fibonacci-Darstellung bestimmt (410);

- den Inhalt $(SR_{Fib}^{x'})$ des Schieberegisters eines Generators einer verschobenen und nicht dezimierten Version der ersten Sequenz in der Fibonacci-Darstellung ausgehend von dem im vorhergehenden Schritt erhaltenen Inhalt bestimmt (420);

- den Inhalt $(SR_{Fib}^{x})$ des Schieberegisters des Generators der ersten Sequenz in einer Fibonacci-Darstellung ausgehend von dem im vorhergehenden Schritt erhaltenen Inhalt bestimmt (430);
- die Gold-Sequenz $(z_n)$ als Summe der im vorhergehenden Schritt erhaltenen ersten Sequenz und der zweiten Sequenz berechnet (440);
- den Verschlüsselungscode ausgehend von dem im vorhergehenden Schritt erhaltenen Gold-Code ableitet (440).

7. Verfahren zur Schätzung eines Verschlüsselungscodes, der auf einer Aufwärtsverbindung eines Terminals in einem WCDMA-System verwendet wird, wobei das von dem Terminal auf der Verbindung ausgesandte Signal in Form von Frames ausgesandt und mittels des Verschlüsselungscodes verschlüsselt wird, wobei der Verschlüsselungscode erstellt wird ausgehend von einer Gold-Sequenz $(z_n)$, die erhalten wird als Summe einer ersten $(x_n)$ und einer zweiten $(y)$ Sequenz von maximaler Länge, wobei:

- man das von einem Empfänger empfangene Signal mit der Bruchteilsfrequenz des Verschlüsselungscodes abtastet (610);
- man eine differenzielle Verarbeitung der derart erhaltenen Abtastwerte durchführt (620), wobei die differenzielle Verarbeitung das hermitesche Produkt von aufeinanderfolgenden Abtastwerten und die Berechnung des Imaginärteils des Produkts umfasst, wobei die differenzielle Verarbeitung eine Sequenz von observablen Werten $(v(k))$ liefert;
- man eine iterative Dekodierung (630) der Sequenz von Observablen durchführt, um eine dritte Sequenz $(a)$ zu erhalten als Summe einer verschobenen und dezimierten Version der ersten Sequenz $(\tilde{x})$ und einer verschobenen und dezimierten Version der zweiten Sequenz $(\tilde{y})$;

- man den Inhalt $(SR_{Gal}^{a})$ des Schieberegisters des Generators der dritten Sequenz gemäß einer Galois-Darstellung bestimmt (640);

- man ausgehend von dem im vorhergehenden Schritt erhaltenen Inhalt die jeweiligen Inhalte $(SR_{Fib}^{\tilde{x}}, SR_{Fib}^{\tilde{y}})$ des Schieberegisters des Generators einer verschobenen und dezimierten Version der ersten Sequenz $(\tilde{x}_n)$ und des Schieberegisters des Generators einer verschobenen und dezimierten Version der zweiten Sequenz $(\tilde{y})$ in einer Galois-Darstellung bestimmt (650), und man hieraus die jeweiligen Inhalte der Schieberegister in einer Fibonacci-Darstellung ableitet (660);

- man zu einem gegebenen Messzeitpunkt ausgehend von den im vorhergehenden Schritt erhaltenen Inhalten der Register in einer Fibonacci-Darstellung die jeweiligen Inhalte $(SR_{Gal}^x, SR_{Gal}^y)$ der Register von Generatoren der ersten und zweiten Sequenzen ($x_n$, y) in einer Fibonacci-Darstellung bestimmt (670);

- man ausgehend von den im vorhergehenden Schritt erhaltenen Inhalten der Register die erste und die zweite Sequenz und dann den Verschlüsselungscode ableitet (680).

8. Verfahren zur Schätzung eines Verschlüsselungscodes nach Anspruch 7, **dadurch gekennzeichnet, dass** man den Inhalt $(SR_{Gal}^a)$ des Schieberegisters des Generators der dritten Sequenz gemäß einer Galois-Darstellung ausgehend vom Inhalt $(SR_{Fib}^a)$ des Schieberegisters dieses Generators in einer Fibonacci-Darstellung bestimmt (640), wobei dieser Inhalt selbst wiederum als die Liste der ersten Bits der dritten Sequenz erhalten wird.

9. Verfahren zur Schätzung eines Verschlüsselungscodes nach Anspruch 7 oder 8, **dadurch gekennzeichnet, dass** man aus dem Inhalt des Registers des Generators der zweiten Sequenz am Anfang eines Frames und aus dem Inhalt dieses gleichen Registers, bestimmt zum Messzeitpunkt, eine Verschiebung des Messzeitpunkts bezüglich des Anfangs des Frames ableitet.

**Claims**

1. Scrambling code estimation method used on an uplink of a terminal in a WCDMA system, the signal transmitted by the terminal on said link being transmitted in the form of frames and scrambled by means of the scrambling code, the scrambling code being constructed from a Gold sequence ($z_n$) obtained as sum of a first ($x_n$) and of a second (y) sequences of maximal length, wherein:

- one samples (310), at the chip frequency of the scrambling code, the signal received by a receiver;
- one performs a differential treatment (320) of the samples thereby obtained, said differential treatment comprising the Hermitian product of successive samples and the calculation of the imaginary part of said product, the differential treatment supplying a sequence of differential values ($v(k)$);
- one multiplies (330) the sequence of differential values by a decimated and shifted version of the second sequence ($\tilde{Y}$), known from the receiver, to obtain a sequence of observables ($\varepsilon(k)$);
- one performs an iterative decoding (340) of the sequence of observables to obtain a shifted and decimated version of the first sequence ($\tilde{x}_n$);
- one determines (350), at a given instant, the content (**SR**$^x$) of the shift register of the generator of the first sequence, and one deduces therefrom the scrambling code.

2. Scrambling code estimation method according to claim 1, **characterised in that** one verifies that the receiver is well synchronised with respect to the scrambling code (360) by:

- calculating from the scrambling code a sequence of differential values $\hat{\mu}(k)=\hat{C}_1(2k+1)\hat{C}_1(2k)\hat{C}_2(2k)$ where $\hat{C}_1$, $\hat{C}_2$ are two components of the scrambling code;
- correlating on a predetermined number of samples the differential values with the differential values calculated at the preceding step;
- determining whether the result of said correlation is above a predetermined threshold.

3. Scrambling code estimation method according to claim 1 or 2, **characterised in that**, in the differential treatment, the differential values are obtained by $v(k) =-\text{Im}(u(2k))$ with $u(2k) =r(2k+1)r(2k)^*$ where $r(2k)$, $r(2k+1)$ are successive samples of the signal received.

4. Scrambling code estimation method according to one of the preceding claims, **characterised in that** the decimated and shifted version, $\tilde{y}$, of the second sequence is obtained from the second sequence $y$ by means of $\tilde{y}(k) = y(2k) + y(2k+1)+ y(2k+4)+ y(2k+6)+ y(2k+17)$.

5. Scrambling code estimation method according to one of the preceding claims, **characterised in that** said iterative decoding is a decoding by passing belief messages between nodes of variables and nodes of constraints, said constraints being supplied by the generator polynomial of the first sequence.

6. Scrambling code estimation method according to one of the preceding claims, **characterised in that** one estimates the scrambling code by:

- determining (410) the content $\left(\mathbf{SR}_{Fib}^{\tilde{x}}\right)$ of the shift register of a generator of said shifted and decimated version ($\tilde{x}$) of the first sequence, according to a Fibonacci representation;

- determining (420) the content $\left(\mathbf{SR}_{Fib}^{x'}\right)$ of the shift register of a generator of a shifted and non-decimated version of the first sequence in the Fibonacci representation, from the content obtained at the preceding step;

- determining (430) the content $\left(\mathbf{SR}_{Fib}^{x}\right)$ of the shift register of the generator of the first sequence in a Fibonacci representation, from the content obtained at the preceding step;
- calculating (440) said Gold sequence ($z_n$) as sum of the first sequence obtained at the preceding step, and of the second sequence;
- deducing (440) the scrambling code from the Gold code obtained at the preceding step.

7. Scrambling code estimation method used on an uplink of a terminal in a WCDMA system, the signal transmitted by the terminal on said link being transmitted in the form of frames and scrambled by means of the scrambling code, the scrambling code being constructed from a Gold sequence ($z_n$) obtained as sum of a first ($x_n$) and of a second ($y$) sequences of maximal length, wherein:

- one samples (610), at the chip frequency of the scrambling code, the signal received by a receiver;
- one performs a differential treatment (620) of the samples thereby obtained, said differential treatment comprising the Hermitian product of successive samples and the calculation of the imaginary part of said product, the differential treatment supplying a sequence of observable values ($v(k)$);
- one performs an iterative decoding (630) of the sequence of observables to obtain a third sequence ($a$), sum of a shifted and decimated version of the first sequence ($\tilde{x}$) and of a shifted and decimated version of the second sequence ($\tilde{y}$);

- one determines (640) the content $\left(\mathbf{SR}_{Gal}^{a}\right)$ of the shift register of the generator of the third sequence according to a Galois representation;

- one determines (650), from the content obtained at the preceding step, the respective contents $\left(\mathbf{SR}_{Fib}^{\tilde{x}},\mathbf{SR}_{Fib}^{\tilde{y}}\right)$ of the shift register of the generator of a shifted and decimated version of the first sequence ($\tilde{x}_n$) and of the shift register of the generator of a shifted and decimated version of the second sequence ($\tilde{y}$), in a Galois representation, and one deduces therefrom (660) the respective contents of the shift registers in a Fibonacci representation;

- one determines (670), at a given measuring instant, from the contents of the registers in a Fibonacci representation obtained at the preceding step, the respective contents $\left(\mathbf{SR}_{Gal}^{x},\mathbf{SR}_{Gal}^{y}\right)$ of the registers of generators of the first and second sequences ($x_n$, $y$) in a Fibonacci representation;

- one deduces (680), from the contents of the registers obtained at the preceding step, the first and second sequences, then the scrambling code.

8. Scrambling code estimation method according to claim 7, **characterised in that** one determines (640) the content $\left(\mathbf{SR}_{Gal}^{a}\right)$ of the shift register of the generator of the third sequence according to a Galois representation from the content $\left(\mathbf{SR}_{Fib}^{a}\right)$ of the shift register of said generator in a Fibonacci representation, said content being itself obtained as the list of the first bits of the third sequence.

9. Scrambling code estimation method according to claim 7 or 8, **characterised in that** one deduces from the content of the register of the generator of the second sequence, at the start of frame, and from the content of this same register, determined at the measuring instant, a shift of the measuring instant with respect to the start of frame.

**Fig. 1**

**Fig. 2**

Echantillonnage du signal reçu
à la fréquence bribe                     310

$r(k)$

Traitement différentiel                  320

$v(k)$

Multiplication par la séquence           330
$\tilde{Y}(k)$

observables    $\varepsilon(k)$

Décodage itératif à propagation          340
de croyance

$\tilde{x}_n(k)$

Estimation du code                       350
d'embrouillage

$\hat{C}(k)$

vérification de la                       360
synchronisation du récepteur/
code d'embrouillage

## Fig. 3

détermination du contenu du SR de la séquence $\tilde{x}_n$ dans la représentation de Fibonacci — 410

$SR_{Fib}^{\tilde{x}}$

détermination du contenu du SR de la séquence non décimée $x'_n$ dans la représentation de Fibonacci — 420

$SR_{Fib}^{x'}$

430

détermination du contenu du SR de la séquence $x_n$ dans la représentation de Fibonacci

$SR_{Fib}^{x}$

440

Calcul de la séquence $z_n$
Détermination de $\hat{c}$

**Fig. 4**

**Fig. 5A**

**Fig. 5B**

Echantillonnage du signal reçu
à la fréquence bribe

610

$r(k)$

Traitement différentiel

620

observables $v(k)$

Décodage itératif à propagation
de croyance

630

$a(k)$

640

détermination du contenu du
SR de la séquence $a$ dans la
représentation de Galois

$\mathbf{SR}_{Gal}^{a}$

Détermination des contenus des SRs
respectifs des séquences $\tilde{y}$ , $\tilde{x}_n$ dans
la représentation de Galois

650

$\mathbf{SR}_{Gal}^{\tilde{y}}$ | $\mathbf{SR}_{Gal}^{\tilde{x}}$

Détermination des contenus des SRs
respectifs des séquences $\tilde{y}$ , $\tilde{x}_n$ dans
la représentation de Fibonacci

660

$\mathbf{SR}_{Fib}^{\tilde{y}}$ | $\mathbf{SR}_{Fib}^{\tilde{x}}$

Détermination des contenus des SRs
respectifs des séquences $y$ , $x_n$ dans
la représentation de Fibonacci

670

$\mathbf{SR}_{Fib}^{y}$ | $\mathbf{SR}_{Fib}^{x}$

680

Estimation du
code d'embrouillage

## Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070206638 A

**Littérature non-brevet citée dans la description**

- Spreading and modulation (FDD). *l'ETSI 3GP TS 25.213 v4.4.0,* Décembre 2003
- **K. M. CHUGG ; M. ZHU.** A New Approach to Rapid PN Code Acquisition Using Iterative Message Passing Techniques. *IEEE Journal on Selected Areas in Communications,* Mai 2005, vol. 25 (5
- **B. ARAZI.** Decimation of m-sequences leading to any desired phase shift. *Electronics Letters,* Mars 1977, vol. 13 (7